# EUROPÄISCHE PATENTSCHRIFT

(11) **EP 1 299 921 B1**
(45) Veröffentlichungstag und Bekanntmachung des Hinweises auf die Patenterteilung: **29.12.2004**
(21) Anmeldenummer: 01945329.9
(22) Anmeldetag: 29.06.2001
(51) Int. Cl.: H01M 10/50, H01M 2/10

(54) **WÄRMETAUSCHERSTRUKTUR FÜR MEHRERE ELEKTROCHEMISCHE SPEICHERZELLEN**
HEAT EXCHANGER STRUCTURE FOR A PLURALITY OF ELECTROCHEMICAL STORAGE CELLS
STRUCTURE D'ECHANGEUR DE CHALEUR POUR PLUSIEURS ACCUMULATEURS ELECTROCHIMIQUES

(30) Priorität: 13.07.2000 DE 10034134
(43) Veröffentlichungstag der Anmeldung: 09.04.2003
(73) Patentinhaber: DaimlerChrysler AG, 70567 Stuttgart (DE)
(72) Erfinder: BITSCHE, Otmar, 70329 Stuttgart (DE); GERMAN, Johann, 71384 Weinstadt (DE)
(86) Internationale Anmeldenummer: PCT/EP2001/007491
(87) Internationale Veröffentlichungsnummer: WO 2002/007249

(56) Entgegenhaltungen:
- EP-A- 0 177 225
- DE-C- 19 849 491

## Beschreibung

Die Erfindung betrifft elektrochemischer Energiespeicher, umfassend eine Wärmetauscherstruktur, nach der im Oberbegriff von Anspruch 1 näher definierten Art.

Aus der Patentschrift DE 198 49 491 C1 ist eine Vorrichtung zum Temperieren mehrerer elektrochemischer Speicherzellen bekannt, bei der Wärmetauscherkanäle zwischen mehreren Lagen quaderförmiger Speicherzellen angeordnet sind. Die Wärmetauscherkanäle münden in Verteiler und sind mit diesen zu einem starren, gitterförmigen Rahmen verbunden. Die Wärmetauscherkanäle sind als Rohrelemente mit rechteckigem Querschnitt gestaltet und stützen die Speicherzellen ab. Zur Fixierung der Speicherzellen sind Distanzhalter vorgesehen, die innerhalb einer Lage von Speicherzellen diese in einem vorbestimmten Abstand voneinander festhalten. Darüber hinaus ist jeweils aus der DE 90 02 249 Ul bzw. aus der EP 0 917 230 A1 eine Wärmetauscherstruktur für mehrere elektrochemische Speicherzellen mit wenigstens einem von Temperiermedien durchströmten Kanalbauteil bekannt. Dabei weist das Kanalbauteil der aus der EP 0917 230 A1 offenbarten Wärmetauscherstruktur an die Speicherzellen angepasste Ausformungen auf.

Mit der Erfindung soll ein elektrochemischer Energiespeicher geschaffen werden, der bei einfachem Aufbau eine gute Temperierung der einzelnen Speicherzellen ermöglicht.

Erfindungsgemäß ist hierzu ein elektrochemischer Energiespeicher mit den Merkmalen von Anspruch 1 vorgesehen.

Indem ein Wärmetauscherkanal zwischen zwei parallelen Materialstreifen gebildet ist, die in Längsrichtung mehrere an die Speicherzellen angepasste zylinderförmige Ausformungen aufweisen, werden die Speicherzellen formschlüssig durch das Kanalbauteil gehalten. Damit sind keine zusätzlich Distanz- oder Halteelemente erforderlich, um die Speicherzellen gegen Verrutschen zu sichern. Indem die Materialstreifen formschlüssig an den Speicherzellen angreifen, ergibt sich eine große Kontaktfläche und damit eine gute Temperierung der Speicherzellen. Die an die Speicherzellen angepassten Ausformungen der Materialstreifen können dabei durch einfaches Biegen der Materialstreifen oder bereits während des Fertigungsprozesses hergestellt werden.

vorteilhafte weiterbildungen der Erfindung sind in den Unteransprüchen angegeben.

Gemäß Anspruch 2 erfolgt der Aufbau so, dass das Kanalbauteil an benachbarten Längskanten der Materialstreifen angeordnete Stützträger mit jeweils einem sich zwischen die Materialstreifen erstreckenden Abstandssteg aufweist. So ergibt sich ein besonders einfacher Aufbau des Kanalbauteils aus lediglich vier Bauteilen, nämlich zwei Materialstreifen und zwei Stützträgern. Mit Hilfe des sich zwischen die Materialstreifen erstreckenden Abstandsstegs ist der Abstand der parallel zueinander angeordneten Materialstreifen und damit der Querschnitt des Wärmetauscherkanals festgelegt.

Eine besonders einfache Montage des Kanalbauteils ergibt sich dann, wenn der Stützträger gemäß Anspruch 3 einen Fixiersteg aufweist, der sich senkrecht zum Abstandssteg erstreckt und an die Ausformungen der Materialstreifen angepasst ist. Der Stütz-träger muss damit lediglich zwischen die Materialstreifen eingeführt werden, bis die Längskanten der Materialstreifen am Fixiersteg anschlagen. Der Stützträger kann dabei mit dem Abstandssteg und dem Fixiersteg einstückig ausgebildet sein, wodurch der einfache Aufbau der Wärmetauscherstruktur befördert wird.

Ein konstanter Querschnitt des Wärmetauscherkanals kann gemäß Anspruch 4 in einfacher Weise dadurch sichergestellt werden, dass zwischen den beiden Materialstreifen des Kanalbauteils in deren mittleren Bereich ein sich in Längsrichtung der Materialstreifen erstreckender Abstandsstreifen vorgesehen ist. Auf diese Weise können beispielsweise auch zwei Wärmetauscherkanäle in einem Kanalbauteil realisiert werden. In besonderer Weise für die Anordnung zwischen zwei Lagen von Speicherzellen ist die Wärmetauscherstruktur dann geeignet, wenn das Kanalbauteil zwei Wärmetauscherkanäle zwischen je zwei Materialstreifen aufweist, wobei ein Wärmetauscherkanal an einer Oberseite und der andere Wärmetauscherkanal an einer Unterseite des Kanalbauteils liegt. Die Kühlkanäle können dabei zueinander symmetrisch sein, wodurch sich bei einfachem Aufbau ein Vor- und Rücklauf des Temperiermediums zwischen zwei Lagen von Speicherzellen realisieren lässt. Zu einem einfachen Aufbau trägt bei, dass zwei einstückige Stützträger vorgesehen sind, die die vier Materialstreifen der beiden Wärmetauscherkanäle an ihren jeweils benachbarten Längskanten verbinden. Auch dann, wenn zwei Wärmetauscherkanäle pro Kanalbauteil vorgesehen sind, lässt sich dieses in einfacher Weise aus vier Materialstreifen und zwei Stützträgern montieren.

Weisen die Materialstreifen in Längsrichtung gesehen gemäß Anspruch 7 Ausformungen mit abwechselnd entgegengesetzten Krümmungen auf, ergibt sich eine Wellenform der Materialstreifen. Werden Lagen von Speicherzellen jeweils um eine halbe Wellenlänge der Wellenform versetzt angeordnet, kann eine sehr hohe Packungsdichte der Speicherzellen bei gleichzeitig guter Temperierung und guter Lagefixierung der Speicherzellen erreicht werden. Eine besonders gute Temperierung der Speicherzellen durch eine große Kontaktfläche der Wärmetauscherkanäle mit den Speicherzellen ergibt sich dann, wenn die Materialstreifen in Längsrichtung gesehen gemäß Anspruch 8 Ausformungen mit gleichgerichteten Krümmungen aufweisen. Eine solche Ausbildung ist besonders geeignet für eine nicht versetzte Anordnung der einzelnen Lagen der Speicherzellen zueinander.

Die der Erfindung zugrundeliegende Aufgabe wird auch durch einen elektrochemischen Energiespeicher mit den Merkmalen von Anspruch 10 gelöst. Bei einem solchen Energiespeicher sind die Speicherzellen in mehreren parallelen Lagen angeordnet, wodurch sich ein einfacher und kompakter Aufbau des Energiespeichers bei sicherer Fixierung und guter Temperierung der Speicherzellen ergibt.

Eine besonders gleichmäßige Temperierung der Speicherzellen des Energiespeichers ergibt sich gemäß Anspruch 11, wenn das Temperiermedium zwischen zwei Lagen von Speicherzellen in voneinander getrennten Wärmetauscherkanälen in zwei entgegengesetzte Richtungen strömt. Durch die gegenläufige Strömung des Temperiermediums zwischen zwei Lagen wird eine unzureichende Kühlung oder Temperierung weit stromabwärts liegender Speicherzellen vermieden.

Vorteilhaft ist eine Ausbildung der Wärmetauscherstruktur gemäß Anspruch 12 in einer Weise, dass zwei Kanalbauteile zur Aufnahme wenigstens einer Speicherzelle einander gegenüberliegend und so angeordnet sind, dass sich in entgegengesetzte Richtungen erstreckende Ausformungen gegenüberliegen. Auf diese Weise ist nicht nur ein sicherer Halt einer Speicherzelle in den gegenüberliegenden, entgegengesetzten Ausformungen, sondern auch deren gute Temperierung, z.B. Kühlung, durch eine große Kontaktfläche zwischen Wärmetauscherkanälen und Speicherzelle gewährleistet. Eine solche Ausbildung ermöglicht auch eine besonders platzsparende Anordnung der Speicherzellen in mehreren Lagen, wobei die einzelnen Lagen der Speicherzellen im Sinne einer besonders kompakten Anordnung zueinander versetzt sein können.

Ein besonders kompakter Aufbau des Energiespeichers kann erreicht werden, wenn das Temperiermedium zwischen einer ersten und einer zweiten Lage von Speicherzellen entgegengesetzt zu dem Temperiermedium zwischen der zweiten und einer dritten Lage von Speicherzellen strömt. Bei einer solchen Anordnung ist nur eine Lage von Wärmetauscherkanälen zwischen zwei Lagen von Speicherzellen erforderlich, so dass sich ein flacher Aufbau des Energiespeichers ergibt.

Werden mehrere Kanalbauteile im wesentlichen in einer Ebene und parallel zueinander angeordnet, wobei benachbarte Stirnseiten der Kanalbauteile mit einem Verteiler verbunden sind, ergibt sich gemäß Anspruch 13 ein ebenes Modul, das zwischen zwei Lagen von Speicherzellen zu deren Temperierung und Lagef ixierung angeordnet werden kann. Die Wärmetauscherkanäle sind mit Verteilerkanälen in den Verteilern verbunden, wobei dann, wenn zwei entgegengesetzt durchströmte Wärmetauscherkanäle pro Kanalbauteil vorgesehen sind, ebenfalls zwei Verteiler im Verteilerbauteil vorgesehen werden.

Eine besonders zweckmäßige modulare Ausgestaltung ergibt sich gemäß Anspruch 14 durch Vorsehen von wenigstens zwei Verteilern, die durch wenigstens ein parallel zu den Kanalbauteilen verlaufendes Fixierelement verbunden sind. Dadurch wird ein stabiles und flaches Modul geschaffen, bei dem die Verteiler und die Speicherzellen zusätzlich durch das Fixierelement festgelegt werden. Werden drei Fixierelemente pro Modul vorgesehen, entsteht ein stabiler Rahmen aus den Verteilern und den an den Enden und in der Mitte der Verteiler angeordneten Fixierelementen. Die Kanalbauteile können dadurch besonders leicht ausgeführt werden, da der Rahmen aus den Verteilern und den Fixierelementen gebildet ist und die Kanalbauteile daher keine Stützfunktion mehr übernehmen müssen. Das Fixierelement dient dabei auch zur Sicherung der Speicherzellen in Längs- und Querrichtung des Rahmens. Mehrere solcher Module können in Lagen übereinander angeordnet werden, um zusammen mit den Speicherzellen einen stabilen Verbund zu bilden.

Weitere Merkmale und Vorteile der Erfindung sind in der folgenden Beschreibung unter Bezugnahme auf die beigefügten Zeichnungen angegeben. In den Zeichnungen zeigen:
- Fig. 1: eine perspektivische, teilweise geschnittene Ansicht eines Energiespeichers und einer Wärmetauscherstruktur gemäß einer ersten Ausführungsform der Erfindung,
- Fig. 2: eine perspektivische, teilweise geschnittene Ansicht der in der Fig. 1 gezeigten Wärmetauscherstruktur,
- Fig. 3: eine abschnittsweise Seitenansicht eines bei der Wärmetauscherstruktur der Fig. 2 verwendeten Kanalbauteils,
- Fig. 4: eine vergrößerte Draufsicht auf die Stirnseite des Kanalbauteils der Fig. 3,
- Fig. 5: eine vergrößerte Schnittansicht entlang der Linie V-v der Fig. 3,
- Fig. 6: einen abschnittsweisen Längsschnitt des Kanalbauteils der Fig. 3,
- Fig. 7: eine Schnittansicht eines Energiespeichers gemäß der ersten Ausführungsform der Erfindung,
- Fig. 8: eine abschnittsweise Draufsicht auf den Energiespeicher der Fig. 7,
- Fig. 9: eine Schnittansicht eines Energiespeichers gemäß einer zweiten Ausführungsform der Erfindung,
- Fig. 10: die vergrößerte Darstellung der Einzelheit X der Fig. 9,
- Fig. 11: eine abschnittsweise Seitenansicht eines ersten Kanalbauteils der Fig. 10,
- Fig. 12: eine vergrößerte Schnittansicht entlang der Linie XII-XII in der Fig. 11,
- Fig. 13: eine abschnittsweise Seitenansicht eines zweiten Kanalbauteils in der Fig. 10 und
- Fig. 14: eine vergrößerte Schnittansicht entlang des Schnitts IVX-IVX in der Fig. 13.

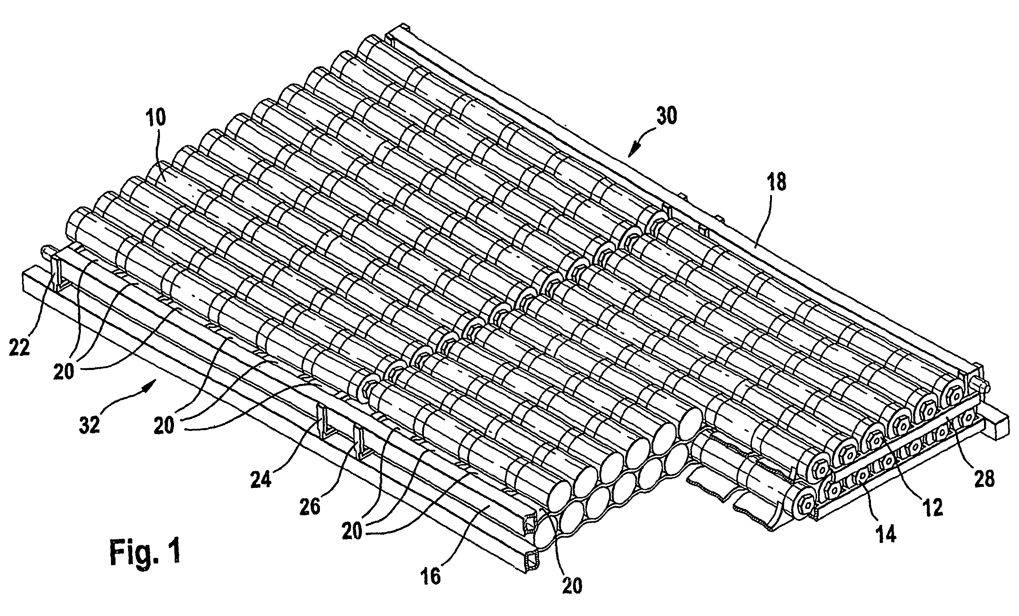

Der in der Fig. 1 dargestellte elektrochemische Energiespeicher weist mehrere Speicherzellen 10 auf, die in zwei parallelen Lagen 12 und 14 übereinander angeordnet sind. Zwischen den Lagen 12 und 14 ist eine als Kühlvorrichtung eingesetzte Wärmetauscherstruktur angeordnet, die einen ersten Verteiler 16 und einen zweiten Verteiler 18 aufweist. Die Verteiler 16 und 18, in denen jeweils ein Verteilerkanal angeordnet ist, liegen parallel zu den zylindrischen Speicherzellen 10 an den Längsseiten der Lage 12. Die Verteiler 16 und 18 sind durch mehrere parallel zueinander angeordnete Kühlkanalbauteile 20 verbunden. Benachbarte Stirnseiten der Kühlkanalbauteile 20 sind mit dem Verteiler 16 bzw. dem Verteiler 18 verbunden. Der Verteilerkanal des Verteilers 16 steht damit über als Kühlkanäle wirkende Wärmetauscherkanäle in den Kühlkanalbauteilen 20 in Strömungsverbindung mit dem Verteilerkanal im Verteiler 18. Die Ver-teiler 16 und 18 sind auch durch Fixierelemente 22, 24, 26 und 28 miteinander verbunden. Die Fixierelemente 22, 24, 26 und 28 bilden mit den Verteilern 16 und 18 sowie den Kühlkanalbauteilen 20 ein stabiles, rahmenförmiges Kühlmodul 30. Während das Kühlmodul 30 zwischen den Lagen 12 und 14 der Speicherzellen 10 angeordnet ist, ist ein weiteres Kühlmodul 32, das zu dem Kühl-modul 30 im wesentlichen baugleich ist, unter der Lage 14 der Speicherzellen angeordnet. Der in der Fig. 1 gezeigte Energiespeicher kann in einfacher Weise durch Aufsetzen eines weiteren Kühlmoduls auf die Lage 12 der Speicherzellen 10 erweitert werden.

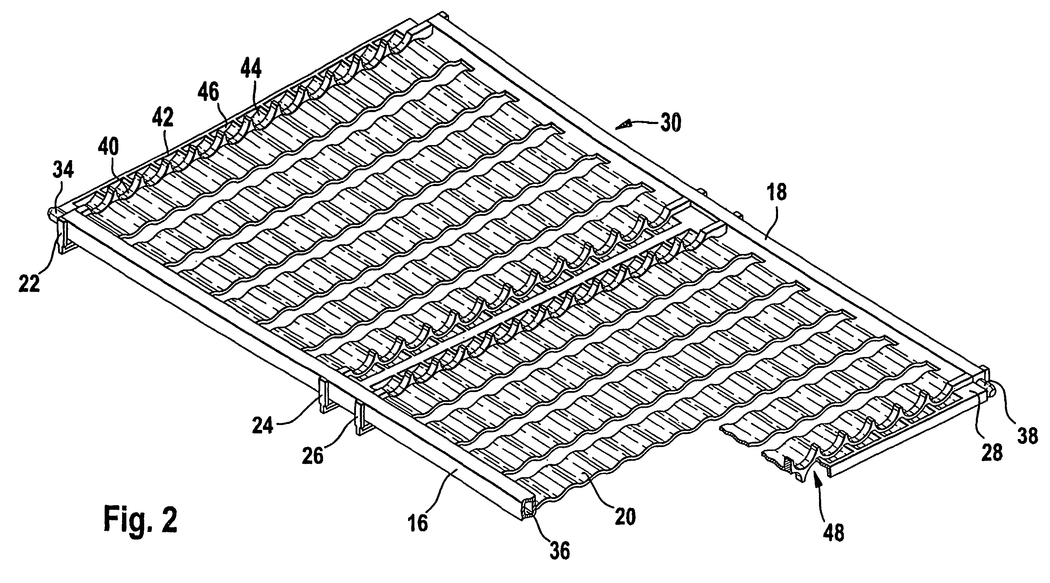

Die Darstellung der Fig. 2 zeigt das Kühlmodul 30 der Fig. 1. Der Verteiler 16 ist an seinem einen Ende mit einem Anschlussstutzen 34 versehen, über den Kühlflüssigkeit als Temperiermedium in den Verteilerkanal 36 im Verteiler 16 gelangen kann. Aus dem Verteilerkanal 36 gelangt die Kühlflüssigkeit in die Kühlkanäle in den Kühlkanalbauteilen 20 und strömt durch diese in den Verteilerkanal im Verteiler 18. Über einen Anschlussstutzen 38 des Verteilers 18, der dem Anschlussstutzen 34 diagonal gegenüberliegend angeordnet ist, verlässt die Kühlflüssigkeit das Kühlmodul 30.

Die Fixierelemente 22, 24, 26 und 28 greifen an den Verteilern 16 und 18 nur an deren Unter- und Seitenflächen an. Die Fixierelemente 22, 24, 26 und 28 können damit von unten auf die Verteiler 16 und 18 aufgeschoben werden. Das Fixierelement 22 weist einen Abschnitt 40 auf, der der Fixierung der Speicherzellen in seitlicher Richtung dient. Hierzu ist der stegförmige Abschnitt 40 mit kreisabschnittsförmigen Ausnehmungen versehen, in die die zylinderförmigen Speicherzellen eingelegt und damit gegen Verrutschen gesichert werden. Ein weiterer Abschnitt 42 des Fixierelements 22 dient hauptsächlich der Festlegung der Speicherzellen in Längsrichtung und weist dazu am Ende einer zylindersegmentförmigen Ausnehmung 44 einen Steg 46 auf. Das am gegenüberliegenden Ende der Verteiler 16 und 18 angeordnete Fixierelement 28 ist gleich wie das Fixierelement 22 aufgebaut, genau wie die Fixierelemente 24 und 26 in der Mitte der Verteiler 16, 18. Die Fixierelemente 24 und 26 in der Mitte der Verteiler 16 und 18 können aber auch zu einem einzigen, einstückigen Bauteil verbunden werden. Die Fixierelemente 22, 24, 26 und 28 des Kühlmoduls 30 weisen an ihrer Oberseite die Ausnehmungen 40 und 44 und an ihrer Unterseite entsprechende Ausnehmungen für die darunter angeordnete Lage an Speicherzellen auf. Solche Ausnehmungen auf der Unterseite der Fixierelemente sind an dem teilweise geschnitten dargestellten Fixierelement 28 zu erkennen und mit dem Bezugszeichen 48 bezeichnet.

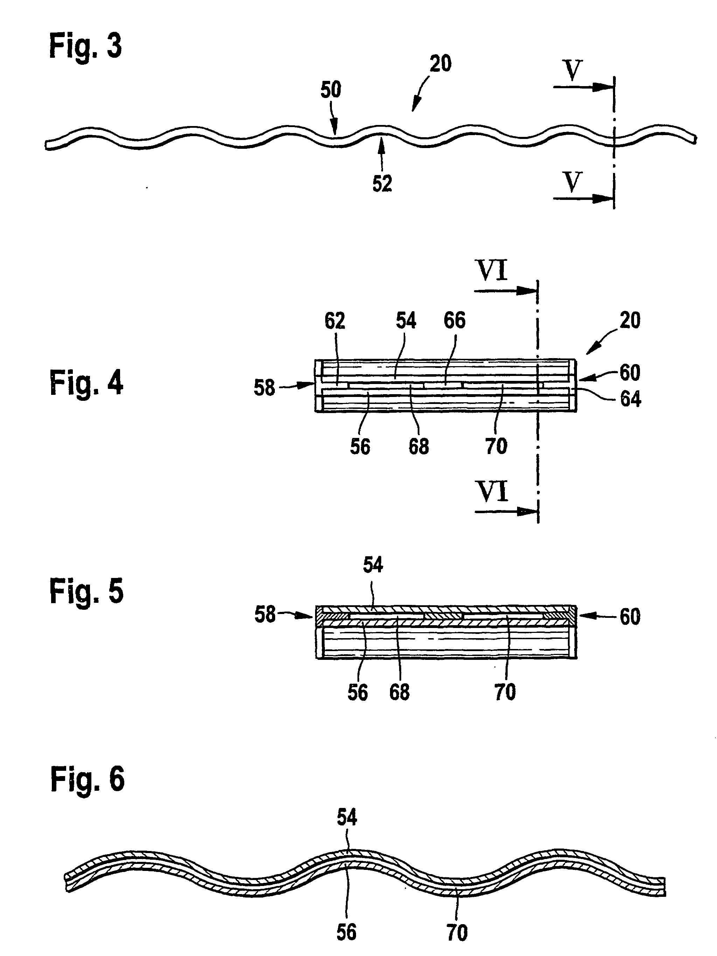

In der Seitenansicht der Fig. 3 ist gut zu erkennen, dass das Kühlkanalbauteil 20 in Längsrichtung gesehen Ausformungen 50, 52 mit abwechselnd entgegengesetzten Krümmungen aufweist, wodurch sich eine Wellenform des Kühlkanalbauteils 20 ergibt. Die Ausformungen 50 und 52 sind an die zylindrische Form der Speicherzellen 10 angepaßt.

Wie der Draufsicht der Fig. 4 und der Schnittansicht der Fig. 5 entlang der Linie V-V in der Fig. 3 zu entnehmen ist, weist das Kühlkanalbauteil 20 zwei Materialstreifen 54 und 56 auf, die parallel zueinander angeordnet sind. An benachbarten Längskanten der Materialstreifen 54 und 56 sind Stützträger 58 und 60 angeordnet. Die Stützträger 58, 60 weisen jeweils einen Abstandssteg 62 auf, der sich zwischen die Materialstreifen 54, 56 erstreckt. Die Materialstreifen 54 und 56 liegen auf der Ober- bzw. Unterseite der Abstandsstege 62 an, so dass sie in einem definierten Abstand parallel zueinander angeordnet sind. Die Stützträger 58, 60 weisen auch jeweils einen Fixiersteg 64 auf, der senkrecht zum Abstandssteg 62 angeordnet ist. Zur Montage des Kühlkanalbauteils 20 werden die Stützträger 58, 60 zwischen die Materialstreifen 54, 56 eingeschoben, bis deren Längskanten an dem Fixiersteg 64 anschlagen.

Mittig zu den Sützträgern 58, 60 ist zwischen den Materialstreifen 54, 56 ein Abstandsstreifen 66 angeordnet. Mit Hilfe des Abstandsstreifens 66 wird der Abstand der Materialstreifen 54, 56 zueinander über deren gesamte Breite konstant gehalten. Damit ist auch der Querschnitt der zwischen den Materialstreifen 54, 56 gebildeten Kühlkanäle 68 und 70 über die gesamte Länge des Kühlkanalbauteils 20 konstant. Indem die Materialstreifen 54, 56 auf der Ober- bzw. Unterseite des Abstandsstegs 62 und mit ihren Längskanten am Fixiersteg 64 anliegen, weisen die Kühlkanäle 68, 70 einen definierten Querschnitt auf, ohne dass bei der Montage des Kühlkanalbauteils 20 schwierige Justierungen vorgenommen werden müssten.

Der wellenförmige Verlauf der Materialstreifen 54, 56 ist in der Schnittansicht der Fig. 6 entlang der Linie VI-VI der Fig. 4 gut zu erkennen. Über ihre gesamte Länge sind die Materialstreifen 54, 56 parallel zueinander angeordnet und bilden zwischen sich den Kühlkanal 70. Die Wellenform der Materialstreifen kann beispielsweise durch einfaches Biegen der Materialstreifen oder durch Formen der Materialstreifen während des Herstellungsprozesses erreicht werden. In der dargestellten Ausführungsform besteht die Wärmetauscherstruktur aus Polycarbonat-Kunststoff.

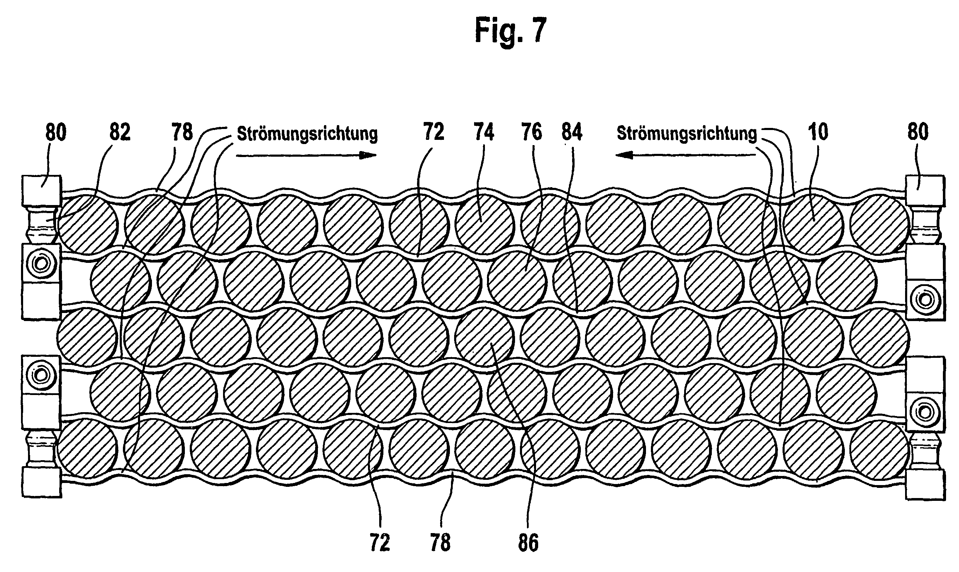

In der Schnittansicht der Fig. 7 ist ein erfindungsgemäßer Energiespeicher dargestellt, der fünf parallele Lagen von Speicherzellen 10 aufweist. Jede Lage der Speicherzellen 10 ist zwischen zwei Kühlmodulen aufgenommen, wie sie im Zusammenhang mit den Fig. 1 bis 7 beschrieben wurden. Die einzelnen Lagen der Speicherzellen 10 sind dabei jeweils um eine halbe Wellenlänge der wellenförmigen Kühlkanalbauteile 20 gegeneinander versetzt. Wie in der Fig. 7 zu erkennen ist, ergibt sich dadurch eine sehr kompakte Anordnung der Speicherzellen, bei der ein zwischen zwei Lagen angeordnetes Kühlkanalbauteil 72 wechselweise mit Speicherzellen einer oberhalb angeordneten ersten Lage 74 und Speicherzellen einer unterhalb angeordneten zweiten Lage 76 eingreift. An ihren Stirnseiten sind die Kühlerkanalbauteile 72, 78 jeweils mit einem Verteiler 80 verbunden. Die in den Verteilern 80 angeordneten Verteilerkanäle sind über Verbindungsleitungen 82 so untereinander und mit den Kühlkanälen in den Kühlkanalbauteilen 72, 78 verbunden, dass die Kühlflüssigkeit von Ebene zu Ebene die Richtung wechselt. So fließt die Kühlflüssigkeit in dem Kühlkanalbauteil 72 zwischen der ersten Lage 74 und der zweiten Lage 76 entgegengesetzt zu der Kühlflüssigkeit in dem Kühlkanalbauteil 84 zwischen der zweiten Lage 76 und einer dritten Lage 86. Dadurch werden die Speicherzellen in den einzelnen Lagen 74, 76, 86 unabhängig von ihrer Position innerhalb einer Lage gleichmäßig gekühlt.

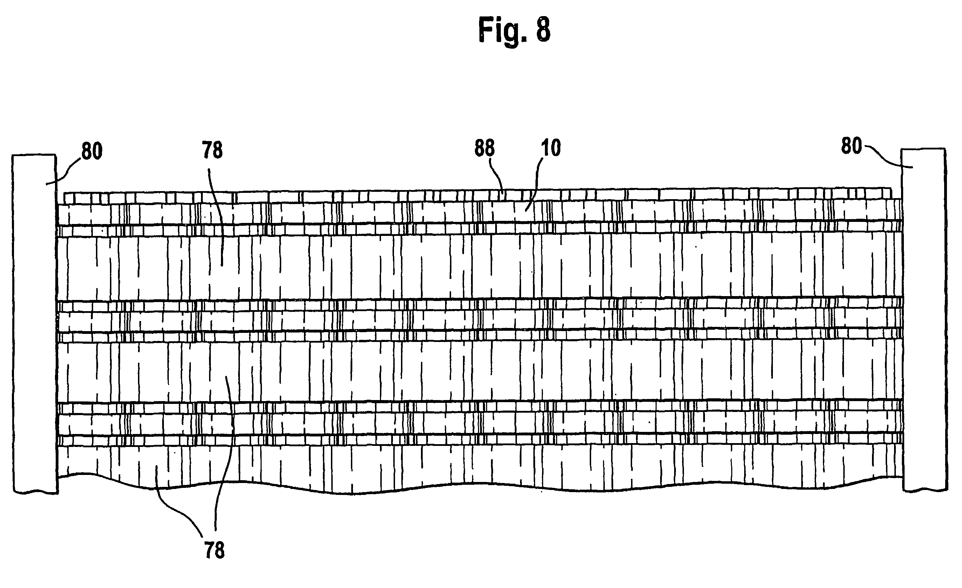

In der Draufsicht der Fig. 8 auf den Energiespeicher der Fig. 7 sind die Verteiler 80 und die parallel zueinander angeordneten und die Verteiler 80 verbindenden Kühlkanalbauteile 78 zu erkennen. An den Stirnseiten der Speicherzellen 10 sind Kontakte 88 zugänglich, über die die einzelnen Speicherzellen 10 miteinander verschaltet werden können.

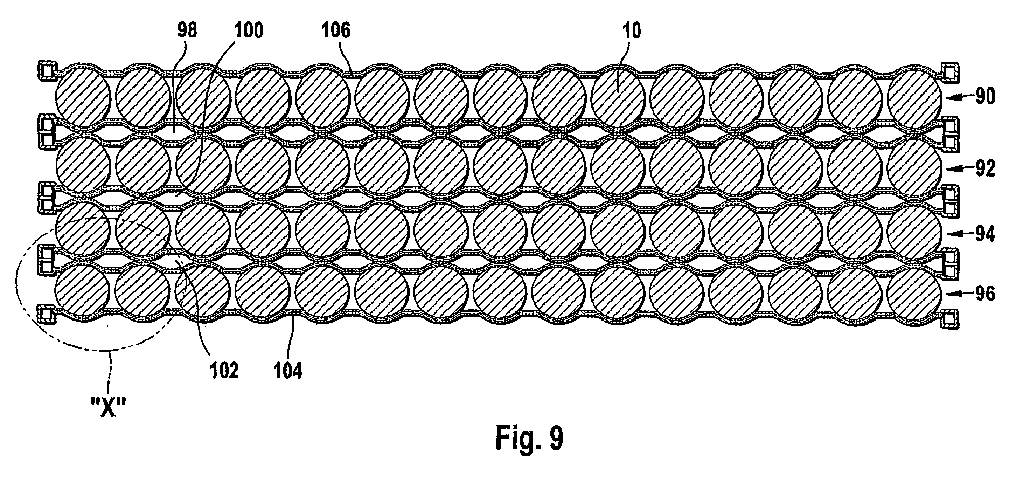

Ein in der Fig. 9 geschnitten dargestellter Energiespeicher gemäß einer zweiten Ausführungsform der Erfindung weist vier parallel zueinander angeordnete Lagen von Speicherzellen 10 auf. Im Unterschied zu der in den Fig. 7 und 8 dargestellten ersten Ausführungsform sind die parallelen Lagen 90, 92, 94 und 96 nicht versetzt zueinander angeordnet. Zwischen zwei Lagen 90, 92, 94 und 96 angeordnete Kühlkanalbauteile 98, 100 und 102 weisen jeweils zwei Kühlkanäle pro Kühlkanalbauteil 98, 100 und 102 auf. Lediglich das unterste Kühlkanalbauteil 104 und das oberste Kühlkanalbauteil 106 weisen jeweils nur einen Kühlkanal auf.

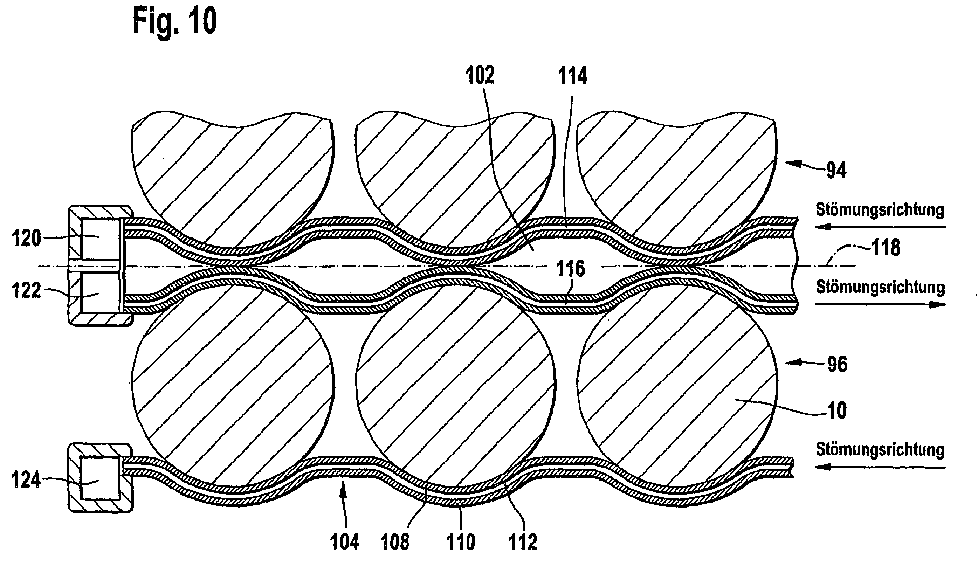

In der Fig. 10 ist die Einzelheit X des in der Fig. 9 dargestellten Energiespeichers vergrößert dargestellt. Das Kühlkanalbauteil 104 weist Materialstreifen 108 und 110 auf, die parallel zueinander angeordnet sind und zwischen sich einen Kühlkanal 112 bilden. Die Ausformungen der Materialstreifen 108, 110 haben die Form von Zylindersegmenten. Der Materialstreifen 108 des Kühlkanalbauteils 104 greift dadurch formschlüssig an den Speicherzellen 10 der Lage 96 an. In Längsrichtung der Materialstreifen 108, 110 gesehen weisen die Materialstreifen 108, 110 Ausformungen mit gleichgerichteten Krümmungen auf. Das zwischen den Lagen 94 und 96 angeordnete Kühlkanalbauteil 102 weist zwei Kühlkanäle 114 und 116 auf, die von der Kühlflüssigkeit in entgegengesetzten Richtungen durchströmt werden. Im Bereich einer Ebene 118 zwischen den Lagen 94 und 96 ergibt sich dadurch eine gegenläufige Kühlflüssigkeitsströmung, wodurch eine besonders gleichmäßige Temperierung der Speicherzellen 10 möglich ist. Der Kühlkanal 114 mündet in einen Verteilerkanal 120, und der Kühlkanal 116 geht, in Strömungsrichtung der Kühlflüssigkeit gesehen, von einem Verteilerkanal 122 aus. Der Kühlkanal 112 mündet in einen Verteilerkanal 124.

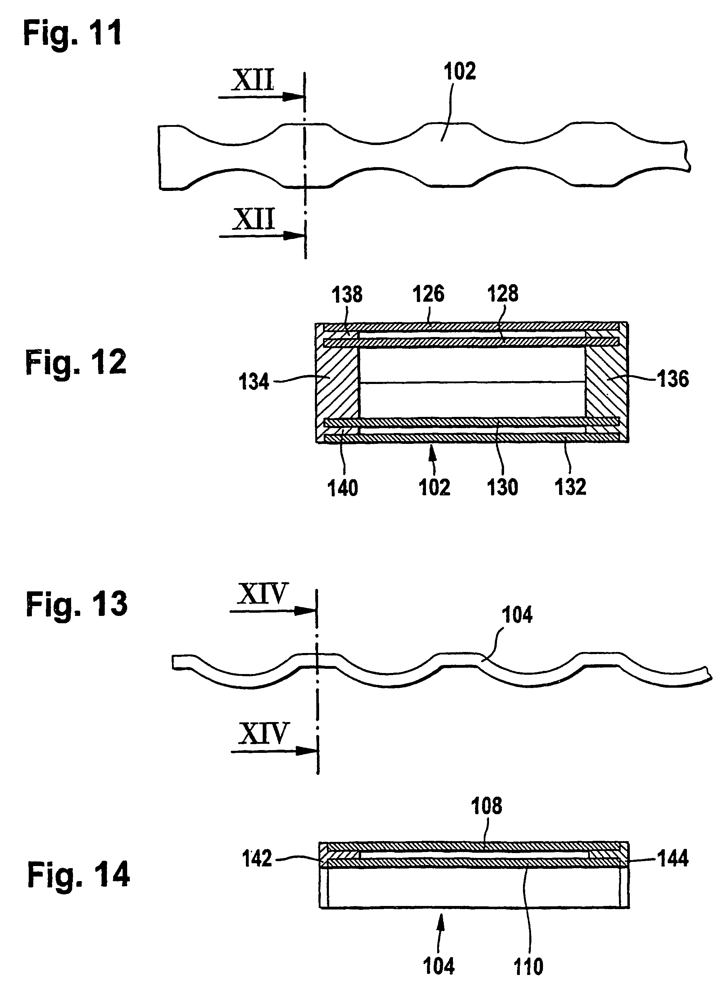

In den Fig. 11 und 12 ist das Kühlkanalbauteil 102 detaillierter dargestellt. Die Schnittansicht der Fig. 12 entlang der Linie XII-XII in der Fig. 11 zeigt den Aufbau des Kühlkanalbauteils 102 aus vier Materialstreifen 126, 128, 130 und 132 und zwei Stützträgern 134 und 136. Der Stützträger 134 ist einstückig ausgeführt und hält durch den Abstandssteg 138 die Materialstreifen 126 und 128 in definiertem Abstand und parallel zueinander. Ein Abstandssteg 140 des Stützträgers 134 hält die Materialstreifen 130 und 132 in definiertem Abstand und parallel zueinander. Der Stützträger 136 ist gleich wie der Stützträger 134 aufgebaut.

Die Ansichten der Fig. 13 und 14 zeigen detaillierte Ansichten des Kühlkanalbauteils 104. In der Schnittansicht der Fig. 14 entlang der Linie XIV-XIV der Fig. 13 ist zu erkennen, dass die Materialstreifen 108 und 110 durch zwei Stützträger 142 und 144 in konstantem Abstand parallel zueinander gehalten werden.

## Patentansprüche

1. Elektrochemischer Energiespeicher, umfassend eine Wärmetauscherstruktur, die wenigstens ein von einem Temperiermedium durchströmbares Kanalbauteil (20; 72, 78, 84; 98, 100, 102, 104, 106) aufweist, sowie mehrere elektrochemische Speicherzellen (10), die in mehreren parallelen Lagen angeordnet sind, wobei das Kanalbauteil (20; 72, 78, 84; 98, 100, 102, 104, 106) Ausformungen (50, 52) aufweist, die an die Form der Speicherzellen (10) angepasst sind,
**dadurch gekennzeichnet,**
**dass** das Kanalbauteil (20; 72, 78, 84; 98, 100, 102, 104, 106) mehrere parallel angeordnete Materialstreifen (54, 56; 108, 110; 126, 128, 130, 132) aufweist, die zwischen sich einen Wärmetauscherkanal (68,70; 104,106; 112, 114, 116) bilden, und die in Strömungsrichtung mehrere Ausformungen aufweisen, welche die Form von Zylindersegmenten haben.

2. Energiespeicher nach Anspruch 1,
**dadurch gekennzeichnet,**
**dass** das wenigstens eine Kanalbauteil (20; 72, 78, 84; 104, 106) zwei parallel zueinander angeordnete Materialstreifen (54, 56; 108, 110; 126, 128, 130, 132) aufweist sowie zwei an benachbarten Längskanten der Materialstreifen (54, 56; 108, 110; 126, 128, 130, 132) angeordnete Stützträger (58, 60; 134, 136; 142, 144), sodass zwischen den Materialstreifen (54, 56; 108, 110; 126, 128, 130, 132) und den Stützträgern (58, 60; 134, 136; 142, 144) zumindest ein Wärmetauscherkanal (68, 70; 104, 106; 112, 114, 116) gebildet ist.

3. Energiespeicher nach Anspruch 2,
**dadurch gekennzeichnet,**
**dass** die Stützträger (58, 60; 134, 136; 142, 144) jeweils einen sich zwischen die Materialstreifen (54, 56; 108, 110; 126, 128, 130, 132) erstreckenden Abstandssteg (62; 138, 140) und jeweils einen sich senkrecht zu dem Abstandssteg (62; 138, 140) erstreckenden Fixiersteg (64). aufweisen, der an die Ausformungen (50, 52) der Materialstreifen (54, 56; 108, 110; 126, 128, 130, 132) angepasst ist, wobei ein Stützträger (58, 60; 134, 136; 142, 144) bevorzugt einstückig mit je einem Abstandssteg (62; 138, 140) und je einem Fixiersteg (64) ausgebildet ist.

4. Energiespeicher nach Anspruch 2 oder 3,
**dadurch gekennzeichnet,**
**dass** zwischen den beiden Materialstreifen (54, 56; 108, 110; 126, 128, 130, 132) des Kanalbauteils (20; 72, 78, 84; 104, 106) in deren mittleren Bereich ein sich in Längsrichtung der Materialstreifen (54, 56; 108, 110; 126, 128, 130, 132) erstreckender Abstandsstreifen (66) vorgesehen ist, sodass zwischen den Materialstreifen (54, 56; 108, 110; 126, 128, 130, 132), je einem Abstandssteg (62; 138, 140) und dem Abstandsstreifen (66) zwei Wärmetauscherkanäle (68, 70; 104, 106; 112, 114, 116) gebildet sind.

5. Energiespeicher nach einem der Ansprüche 2 bis 4,
**dadurch gekennzeichnet,**
**dass** das Kanalbauteil (102) zwei Wärmetauscherkanäle (114, 116) zwischen je zwei Materialstreifen (126, 128; 130, 132) aufweist, wobei ein Wärmetauscherkanal (114) an einer Oberseite und der andere Wärmetauscherkanal (116) an einer Unterseite des Kanalbauteils (102) angeordnet ist,
und **dass** zwei einstückige Stützträger (134, 136) vorgesehen sind, die die vier Materialstreifen (126, 128; 130, 132) der beiden Wärmetauscherkanäle (114, 116) an ihren jeweils benachbarten Längskanten verbinden.

6. Energiespeicher nach einem der Ansprüche 2 bis 5,
**dadurch gekennzeichnet,**
**dass** die Ausformungen (50, 52) der Materialstreifen (54, 56; 108, 110; 126, 128, 130, 132) die Form von Zylindersegmenten haben.

7. Energiespeicher nach einem der Ansprüche 2 bis 6,
**dadurch gekennzeichnet,**
**dass** die Materialstreifen (54, 56) in Längsrichtung gesehen Ausformungen (50, 52) mit abwechselnd entgegengesetzten Krümmungen aufweisen.

8. Energiespeicher nach einem der Ansprüche 2 bis 6,
**dadurch gekennzeichnet,**
**dass** die Materialstreifen (108, 110; 126, 128, 130, 132) in Längsrichtung gesehen Ausformungen mit gleichgerichteten Krümmungen aufweisen.

9. Energiespeicher nach einem der Ansprüche 2 bis 8,
**dadurch gekennzeichnet,**
**dass** das Temperiermedium in zwei benachbarten, durch eine Lage von Speicherzellen (10) getrennten Kanalbauteilen (20; 72, 78, 84; 98, 100, 102, 104, 106) in entgegengesetzten Richtungen strömt.

10. Energiespeicher nach einem der Ansprüche 1 bis 9,
**dadurch gekennzeichnet,**
**dass** das Kanalbauteil (98, 100, 102) zwischen zwei Lagen von Speicherzellen (10) aus zwei voneinander getrennten Wärmetauscherkanälen (114, 116) gebildet ist.

11. Energiespeicher nach Anspruch 10,
**dadurch gekennzeichnet,**
**dass** das Temperiermedium zwischen zwei Lagen von Speicherzellen (10) in den voneinander getrennten Wärmetauscherkanälen (114, 116) in zwei entgegengesetzte Richtungen strömt.

12. Energiespeicher nach einem der Ansprüche 1 bis 11,
**dadurch gekennzeichnet,**
**dass** zwei Kanalbauteile (20; 72, 78, 84; 98, 100, 102, 104, 106) zur Aufnahme wenigstens einer Speicherzelle (10) einander gegenüberliegend so angeordnet sind, dass sich in entgegengesetzte Richtungen erstreckende Ausformungen gegenüber liegen.

13. Energiespeicher nach einem der Ansprüche 1 bis 12,
**dadurch gekennzeichnet,**
**dass** mehrere Kanalbauteile (20; 72, 78, 84; 98, 100, 102, 104, 106) im Wesentlichen in einer Ebene parallel zueinander angeordnet sind und benachbarte Stirnseiten der Kanalbauteile (20; 72, 78, 84; 98, 100, 102, 104, 106) mit einem Verteiler (16, 18) verbunden sind.

14. Energiespeicher nach Anspruch 13,
**dadurch gekennzeichnet,**
**dass** wenigstens zwei Verteiler (16, 18) vorgesehen sind, die durch wenigstens ein parallel zu den Kanalbauteilen (20) verlaufendes Fixierelement (22, 24, 26, 28) verbunden sind.

15. Verwendung eines Energiespeichers nach einem der Ansprüche 1 bis 14 in einem Fahrzeug.

## Claims

1. Electrochemical energy store, comprising a heat exchanger structure, which has at least one passage component (20; 72, 78, 84; 98, 100, 102, 104, 106) through which a temperature-control medium can flow, and a plurality of electrochemical storage cells (10), which are arranged in a plurality of parallel layers, the passage component (20; 72, 78, 84; 98, 100, 102, 104, 106) having formations (50, 52) which are matched to the shape of the storage cells (10), **characterized in that** the passage component (20; 72, 78, 84; 98, 100, 102, 104, 106) has a plurality of parallel material strips (54, 56; 108, 110; 126, 128, 130, 132) which between them form a heat exchanger passage (68, 70; 104, 106; 112, 114, 116) and which in the direction of flow have a plurality of formations which take the form of cylinder segments.

2. Energy store according to Claim 1, **characterized in that** the at least one passage component (20; 72, 78, 84; 104, 106) has two material strips (54, 56; 108, 110; 126, 128, 130, 132) arranged parallel to one another, and two supporting carriers (58, 60; 134, 136; 142, 144) arranged at adjacent longitudinal edges of the material strips (54, 56; 108, 110; 126, 128, 130, 132), so that at least one heat exchanger passage (68, 70; 104, 106; 112, 114, 116) is formed between the material strips (54, 56; 108, 110; 126, 128, 130, 132) and the supporting carriers (58, 60; 134, 136; 142, 144).

3. Energy store according to Claim 2, **characterized in that** the supporting carriers (58, 60; 134, 136; 142, 144) each have a spacer web (62; 138, 140) extending between the material strips (54, 56; 108, 110; 126, 128, 130, 132) and each have a fixing web (64), which extends perpendicular to the spacer web (62; 138, 140) and is matched to the formations (50, 52) of the material strips (54, 56; 108, 110; 126, 128, 130, 132), a supporting carrier (58, 60; 134, 136; 142, 144) preferably being formed integrally with in each case one spacer web (62; 138, 140) and in each case one fixing web (64).

4. Energy store according to Claim 2 or 3, **characterized in that** a spacer strip (66), which extends in the longitudinal direction of the material strips (54, 56; 108, 110; 126, 128, 130, 132), is provided in the central region between the two material strips (54, 56; 108, 110; 126, 128, 130, 132) of the passage component (20; 72, 78, 84; 104, 106), so that two heat exchanger passages (68, 70; 104, 106; 112, 114, 116) are formed between the material strips (54, 56; 108, 110; 126, 128, 130, 132), in each case one spacer web (62; 138, 140) and the spacer strip (66).

5. Energy store according to one of Claims 2 to 4, **characterized in that** the passage component (102) has two heat exchanger passages (114, 116) between in each case two material strips (126, 128; 130, 132), one heat exchanger passage (114) being arranged on a top side of the passage component (102) and the other heat exchanger passage (116) being arranged on an underside of the passage component (102), and **in that** two integral supporting carriers (134, 136) are provided, connecting the four material strips (126, 128; 130, 132) of the two heat exchanger passages (114, 116) at their respectively adjacent longitudinal edges.

6. Energy store according to one of Claims 2 to 5, **characterized in that** the formations (50, 52) of the material strips (54, 56; 108, 110; 126, 128, 130, 132) are in the form of cylinder segments.

7. Energy store according to one of Claims 2 to 6, **characterized in that** the material strips (54, 56) have formations (50, 52) with alternately opposite curvatures, as seen in the longitudinal direction.

8. Energy store according to one of Claims 2 to 6, **characterized in that** the material strips (108, 110; 126, 128, 130, 132) have formations with identically directed curvatures, as seen in the longitudinal direction.

9. Energy store according to one of Claims 2 to 8, **characterized in that** the temperature-control medium flows in opposite directions in two adjacent passage components (20; 72, 78, 84; 98, 100, 102, 104, 106) which are separated by a layer of storage cells (10).

10. Energy store according to one of Claims 1 to 9, **characterized in that** the passage component (98, 100, 102) is formed between two layers of storage cells (10) from two separate heat exchanger passages (114, 116).

11. Energy store according to Claim 10, **characterized in that** the temperature-control medium flows in two opposite directions in the separate heat exchanger passages (114, 116) between two layers of storage cells (10).

12. Energy store according to one of Claims 1 to 11, **characterized in that** two passage components (20; 72, 78, 84; 98, 100, 102, 104, 106) for accommodating at least one storage cell (10) are arranged opposite one another in such a way that formations extending in opposite directions lie opposite one another.

13. Energy store according to one of Claims 1 to 12, **characterized in that** a plurality of passage components (20; 72, 78, 84; 98, 100, 102, 104, 106) are arranged substantially in one plane parallel to one another, and adjacent end sides of the passage components (20; 72, 78, 84; 98, 100, 102, 104, 106) are connected to a manifold (16, 18).

14. Energy store according to Claim 13, **characterized in that** there are at least two manifolds (16, 18), which are connected by at least one fixing element (22, 24, 26, 28) running parallel to the passage components (20).

15. Use of an energy store according to one of Claims 1 to 14 in a vehicle.

## Revendications

1. Accumulateur d'énergie électrochimique comprenant une structure d'échangeur de chaleur présentant au moins un élément canal (20 ; 72, 78, 84 ; 98, 100, 102, 104, 106) dans lequel peut s'écouler un fluide de contrôle de température, ainsi que plusieurs cellules accumulatrices électrochimiques (10) disposées en plusieurs couches parallèles, l'élément canal (20 ; 72, 78, 84 ; 98, 100, 102, 104, 106) présentant des façonnages (50, 52) adaptés à la forme des cellules accumulatrices (10),
**caractérisé en ce que**
l'élément canal (20 ; 72, 78, 84 ; 98, 100, 102, 104, 106) présente plusieurs bandes de matière (54, 56 ; 108, 110 ; 126, 128, 130, 132) disposées parallèlement et formant entre elles un canal échangeur de chaleur (68, 70 ; 104, 106 ; 112, 114, 116) et présentant, dans la direction de l'écoulement, plusieurs façonnages ayant la forme de segments de cylindre.

2. Accumulateur d'énergie selon la revendication 1,
**caractérisé en ce que**
au moins un élément canal (20 ; 72, 78, 84 ; 104, 106) présente deux bandes de matière (54, 56 ; 108, 110 ; 126, 128, 130, 132) disposées parallèlement l'une par rapport à l'autre, ainsi que deux supports entretoises (58, 60 ; 134, 136 ; 142, 144) disposés sur des bords longitudinaux adjacents des bandes de matière (54, 56 ; 108, 110 ; 126, 128, 130, 132), de sorte à former au moins un canal échangeur de chaleur (68, 70 ; 104, 106 ; 112, 114, 116) entre les bandes de matière (54, 56 ; 108, 110 ; 126, 128, 130, 132) et les supports entretoises (58, 60 ; 134, 136 ; 142, 144).

3. Accumulateur d'énergie selon la revendication 2,
**caractérisé en ce que**
chaque support entretoise (58, 60 ; 134, 136 ; 142, 144) présente une entretoise (62 ; 138, 140) s'étendant entre les bandes de matière (54, 56 ; 108, 110 ; 126, 128, 130, 132) et un dos de fixation (64) s'étendant perpendiculairement à l'entretoise (62 ; 138, 140), adapté aux façonnages (50, 52) des bandes de matière (54, 56 ; 108, 110 ; 126, 128, 130, 132), un support entretoise (58, 60 ; 134, 136 ; 142, 144) comportant de préférence une entretoise (62 ; 138, 140) et un dos de fixation (64) formés d'un seul tenant.

4. Accumulateur d'énergie selon la revendication 2 ou 3,
**caractérisé en ce que**
une bande entretoise (66), s'étendant dans la direction longitudinale des bandes de matière (54, 56 ; 108, 110 ; 126, 128, 130, 132), est prévue entre les deux bandes de matière (54, 56 ; 108, 110 ; 126, 128, 130, 132) de l'élément canal (20 ; 72, 78, 84 ; 104, 106), dans la zone centrale de celles-ci, de sorte à former deux canaux échangeurs de chaleur (68, 70 ; 104, 106 ; 112, 114, 116) entre les bandes de matière (54, 56 ; 108, 110 ; 126, 128, 130, 132), à chaque fois une entretoise (62 ; 138, 140), et la bande entretoise (66).

5. Accumulateur d'énergie selon l'une des revendications 2 à 4,
**caractérisé en ce que**
l'élément canal (102) présente deux canaux échangeurs de chaleur (114, 116), à chaque fois entre deux bandes de matière (126, 128 ; 130, 132), un canal échangeur de chaleur (114) étant disposé sur un côté supérieur et l'autre canal échangeur de chaleur (116) étant disposé sur un côté inférieur de l'élément canal (102),
et **en ce que** deux supports entretoise (134, 136) formés d'un seul tenant sont prévus, reliant les quatre bandes de matière (126, 128, 130, 132) des deux canaux échangeurs de chaleur (114, 116) respectivement par leurs bords longitudinaux adjacents.

6. Accumulateur d'énergie selon l'une des revendications 2 à 5,
**caractérisé en ce que**
les façonnages (50, 52) des bandes de matière (54, 56 ; 108, 110 ; 126, 128, 130, 132) ont la forme de segments de cylindre.

7. Accumulateur d'énergie selon l'une des revendications 2 à 6,
**caractérisé en ce que**
les bandes de matière (54, 56) présentent, vu dans la direction longitudinale, des façonnages (50, 52) présentant des courbures alternées opposées.

8. Accumulateur d'énergie selon l'une des revendications 2 à 6,
**caractérisé en ce que**
les bandes de matière (108, 110 ; 126, 128, 130, 132) présentent, vu dans la direction longitudinale, des façonnages avec des courbures orientées dans la même direction.

9. Accumulateur d'énergie selon l'une des revendications 2 à 8,
**caractérisé en ce que**
le fluide de contrôle de température s'écoule dans des directions opposées dans deux éléments canal (20 ; 72, 78, 84 ; 98, 100, 102, 104, 106) voisins séparés par une couche de cellules accumulatrices (10).

10. Accumulateur d'énergie selon l'une des revendications 1 à 9,
**caractérisé en ce que**
l'élément canal (98, 100, 102) est formé, entre deux couches de cellules accumulatrices (10), par deux canaux échangeurs de chaleur (114, 116) séparés l'un de l'autre.

11. Accumulateur d'énergie selon la revendication 10,
**caractérisé en ce que**
le fluide de contrôle de température s'écoule dans deux directions opposées dans les canaux échangeurs de chaleur (114, 116) séparés l'un de l'autre, entre deux couches de cellules accumulatrices (10).

12. Accumulateur d'énergie selon l'une des revendications 1 à 11,
**caractérisé en ce que**
pour recevoir au moins une cellule accumulatrice (10), deux éléments canal (20 ; 72, 78, 84 ; 98, 100, 102, 104, 106) sont disposés l'un vis-à-vis de l'autre de sorte que des façonnages s'étendant dans des directions opposées se font face.

13. Accumulateur d'énergie selon l'une des revendications 1 à 12,
**caractérisé en ce que**
plusieurs éléments canal (20 ; 72, 78, 84 ; 98, 100, 102, 104, 106) sont disposés sensiblement dans un plan, parallèlement les uns par rapport aux autres, et **en ce que** des côtés frontaux voisins des éléments canal (20 ; 72, 78, 84 ; 98, 100, 102, 104, 106) sont reliés à un distributeur (16, 18).

14. Accumulateur d'énergie selon la revendication 13,
**caractérisé en ce que**
au moins deux distributeurs (16, 18) sont prévus, reliés par au moins un élément de fixation (22, 24, 26, 28) s'étendant parallèlement aux éléments canal (20).

15. Utilisation d'un accumulateur d'énergie selon l'une des revendications 1 à 14 dans un véhicule.
